# EUROPEAN PATENT SPECIFICATION

(11) **EP 2 221 214 B1**
(45) Date of publication and mention of the grant of the patent: **16.01.2013**
(21) Application number: 09152648.3
(22) Date of filing: 12.02.2009
(51) Int. Cl.: B60P 3/42

(54) **Dual use transport vehicle**
Transportfahrzeug mit doppelter Verwendung
Véhicule de transport à double usage

(43) Date of publication of application: 25.08.2010
(73) Proprietor: Jerich Austria GmbH, 8200 Gleisdorf (AT)
(72) Inventor: Herbert Jerich, 8200 Gleisdorf (AT)
(74) Representative: Ketelaars, Maarten F.J.M.

(56) References cited:
- EP-A- 0 278 558
- EP-A- 0 763 459
- DE-A1- 1 580 567
- DE-A1- 1 806 095
- DE-U1-202006 002 564
- NL-C2- 1 007 754

## Description

The invention is related to a transport vehicle, comprising a chassis provided with wheels, a load compartment on said chassis and provided with a load floor, longitudinal side walls which extend upwardly with respect to the load floor, a bulkhead at the front, at least one load door at the back, as well as a roof, wherein a mezzanine floor is provided in the load compartment above the load floor, lifting means which cooperate with the mezzanine floor for adjusting the height of said mezzanine floor with respect to the load floor, as well as a closed flexible bag for containing a fluid, said bag having a lower surface and an upper surface, said lower surface of the bag being supported in the load compartment and said upper surface of the bag being freely supported above said lower surface in dependence on the contents of the bag.

Such transport vehicles are known. As a result of their ability to be converted into either a vehicle which is fit for transporting a liquid, or into a vehicle which is fit for transporting other goods, in particular packed goods, parcels and the like, they provide a high degree of operational efficiency. Traditionally, tank vehicles were only capable of transporting bulk goods, in particular liquid bulk goods, which often meant that no return loads other than (the same) liquid could be handled. This severely limited the usefulness of said traditional tank vehicles.

According to the state of the art as disclosed in EP-A-763.459, an improvement has been obtained by providing a flexible bag on the load floor of the vehicle. Above said bag, a mezzanine floor is provided which is displaceable between a high position an a low position. Before filling the bag with a liquid, the mezzanine floor is lifted into the high position. Possibly, some goods are placed on said mezzanine floor. As the bag is at a low position on the load floor of the load compartment, the centre of gravity of the liquid load is at such low position as well which is advantageous for the stability of the loaded vehicle. In case no liquid is to be transported, the mezzanine floor is lowered while the bag is in a collapsed state. A larger amount of goods can then be stored in the load compartment.

The disadvantage of such arrangement is that, even in the lowered state, the mezzanine floor is still at a considerable distance above the load floor of the compartment, having regard to the fact that the collapsed bag still takes some space. Consequently, it is difficult to load or unload the mezzanine floor, because loading devices such as a fork lift are obliged to operate at a fairly high level. Moreover, although the bag is covered by the mezzanine floor, it is still in a somewhat vulnerable position. The bag may easily become damaged by objects which fall off the mezzanine floor.

According to another proposal as disclosed in DE-U-20.2006.002.564, a mezzanine floor is provided in the load compartment of a transport vehicle, together with a rigid, metal tank on top of the mezzanine floor. In the lowered position of the mezzanine floor, the tank will be able to receive a liquid. The centre of gravity of the load is thus at a relatively low position. In case other goods than liquids are to be transported, the mezzanine floor together with tank is lifted. The load floor thus becomes available for receiving these goods. The disadvantage of this arrangement is that the volume which becomes available after lifting the mezzanine floor, remains limited. The tank still takes a considerable space above the lifted mezzanine floor, which goes at the expense of the space below the mezzanine floor. Thus, problems arise when moving the goods over the load floor, and moreover the stacking height is small.

The object of the invention is to provide a transport vehicle of the type described before wherein the bag can be emptied in an improved way. Said object is achieved in that the flexible bag is positioned on top of the mezzanine floor , in that the bag is provided with a fluid valve for filling and emptying the bag, in that the fluid valve is at the back of the bag near the load door(s), and in that on each longitudinal side wall, relatively close to the front wall, a pulling member is provided which is shorter than a pulling member further away from said front wall, in such a way that the mezzanine floor is made to tilt as a result of the length differences of said pulling members.

The position of the flexible bag on top of the mezzanine floor provides a combination of advantages which increases the operational efficiency of the transport vehicle in question considerably. The availability of the flexible bag within the load compartment makes it possible to convert the transport vehicle into a liquid tanker. The mezzanine floor is lowered on top of the load floor, after which the flexible bag can be filled with liquid. As the flexible bag may be of a size which is similar to the size of the mezzanine floor or the load floor, a large amount of liquid can be accommodated. As an example, the flexible bag may have a capacity of 24.000 liters of liquid, which amounts to a payload of about 24 tons. Flexible bags having other capacities may however be used as well. Also, several bags may be placed next to each other on top of the mezzanine floor. In that case, preferably such bags adjoin each other so as to fully occupy the space available on the mezzanine floor. Always, the centre of gravity of the liquid load is at the lowest possible level, which greatly contributes to the stability of the transport vehicle.

Conversely, the transport vehicle is quite well fit for parcels or packed goods as well. The mezzanine floor with the emptied flexible bag is then lifted to a high position directly beneath the roof of the load compartment. As the flexible bag is in the collapsed state, the combined height of the floor and bag is fairly low which means that height of the load compartment, measured from the load floor to the underside of the lifted mezzanine floor, is only a fraction smaller than the total height of the load compartment. Thus, the useful transport space within the load compartment is hardly affected, which means that any goods can be accommodated therein.

Furthermore, in the lifted state of the mezzanine floor and bag, the standard load floor becomes available for positioning the packed goods thereon. Thus, the loads can be handled at a normal height, which is of importance while moving the loads by means of e.g. a forklift truck. Moreover, moving the loads within the load compartment itself is also possible as a result of the height available within the load compartment. The mezzanine floor with flexible bag can be installed in any standard transport vehicle, such as a trailer. Additionally, in the lifted position the vulnerable flexible bag is well protected against damage having regard to the fact that the packed goods are at a lower level.

The flexible bag may comprise a flexible material such as rubber or plastic. The bag is closed in itself, and is provided with a fluid valve for filling and emptying the bag. The fluid valve is at the back of the bag near the load door(s). This contributes to the ease of filling and emptying the bag. The mezzanine floor is preferably provided with a recess in which the valve is accommodated. When lifting the mezzanine floor up to and against the roof of the load compartment, the valve, which may be rather bulky, will not hamper the upward movement of the mezzanine floor as it will be accommodated within said recess of the mezzanine floor. In the case of a trailer, the bag has an elongate shape which largely conforms the shape of the load floor of the trailer.

With the aim of stabilizing the filled bag, the mezzanine floor may comprise upstanding longitudinal side edges. Also, these upstanding edges will protect the bag with respect to contact with the longitudinal side walls of the load compartment, thus preventing frictional wear of the bag. Also, tie wraps may be provided which extend over the bag and the ends of which are connected to opposite longitudinal sides of the mezzanine floor.

The means for lifting and lowering the mezzanine floor and bag should preferable occupy as little space as possible, so as to guarantee a maximum load capacity of the load compartment. To that end, the lifting means preferably comprise flexible pulling members, such as straps, one end of which is connected to the mezzanine floor and the other end of which is wound on a respective winch element. Several of these pulling members, together with corresponding winch elements, are distributed at regular intervals along the longitudinal side walls, so as to provide for a reliable handling of the mezzanine floor. Preferable, the winch elements are located as close to the roof of the load compartment as possible in order to reach the maximum lifting height of the mezzanine floor and thereby the maximum height between the load floor and the lifted mezzanine floor.

The winch elements can be operated in a uniform way, for instance by interconnecting these through a torsion rod. The torsion rod may be driven in rotation through any suitable drive source, such as an electric motor or a hydraulic motor. Preference is given to a hydraulic motor, as the torsion rods, and thus the mezzanine floor, can then be simply immobilized by closing the hydraulic circuit.

The torsion rods at both longitudinal side walls of the load compartment may be interconnected in order to obtain a uniform movement of the mezzanine floor. To that end, each torsion rod may engage a transversely extending drive rod through a tooth wheel transmission, said drive rod being connected to a hydraulic or electric motor. However, other interconnection means may be provided as well, such as electric interconnections.

After the mezzanine floor and the flexible bag have been lifted, they may be locked in that position by separate locking means. In this connection, the side walls may comprise upwardly extending mounting rails. By means of a support bar, can be connected to pairs of opposite mounting rails, the mezzanine floor can be supported.

As mentioned before, the valve is preferable positioned at the back of the bag, near the load compartment doors. Emptying of the bag is obtained by opening the valve, which makes the liquid simply flow out of the bag under the influence of gravity. However, in the case of a fairly long bag, as may occur in long trailers, some of the liquid tends to remain within the bag as the valve is simply too far away. Still, the bag can be emptied fully by applying a method which comprises the steps of:
- operating the lifting means while the bag is filled with said fluid,
- during said operation of the lifting means, making the mezzanine floor tilt towards the fluid valve,
- opening the fluid valve and making the fluid flow towards said valve under the influence of the tilted position of the bag,
- providing, on each longitudinal side wall, a pulling member relatively close to the front wall which is shorter than a pulling member further away from said front wall,
- making the mezzanine floor tilt as a result of the length differences of said pulling members.

Reference is furthermore made to the state of the art as disclosed in FR-A-900.012, related to a vehicle with a load compartment provided with a mezzanine floor which is sealed with respect to the top region of the load compartment by means of membranes. The space defined above the mezzanine floor and between the membranes may receive a liquid. The disadvantage of said prior art proposal is that the membranes do not provide a completely closed bag for the liquid, which will lead to problems such as spilling over of the liquid, in particular when negotiating bends with the transport vehicle. Furthermore, it is not possible to install the liquid compartment in a simple manner, as the membranes will have to be connected to the side walls of the load compartment.

WO-00/03893 discloses a bulk goods transport vehicle with an open topped body. A bladder, which is connected to the open top, can be deployed downwardly into the body so as to avoid cross-contamination. The load compartment of said prior art transport vehicle does not have load doors at the back, and is therefore not fit for transporting packed goods such as parcels.

The invention will now be described further with reference to the embodiment shown in the drawings.
Figure 1 shows the truck with trailer according to the invention.
Figure 2 shows a view from the back of the trailer with open back doors while the mezzanine floor is in the uppermost position.
Figure 3 shows a view similar to figure 2, with the mezzanine floor in an intermediate position.
Figure 4 shows the mezzanine floor in the fully lowered position.
Figure 5 shows a view of the ceiling of the load compartment of the trailer, with a hydraulic drive.
Figure 6 shows a view of the mezzanine floor in the tilted position.
Figure 7 shows the view of the flexible bag filled with a liquid.

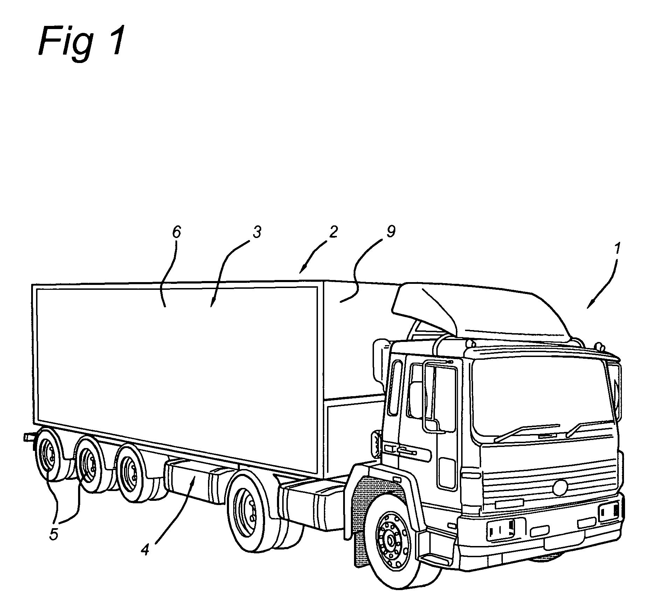

Figure 1 shows an example of a transport vehicle which has been equipped with a mezzanine floor and flexible bag according to the invention. Said transport vehicle consists of a truck 1 and trailer 2. Said trailer 2 consists of the load compartment 3 and the chassis 4 which is provided with wheels 5. Furthermore, the truck 1 and the trailer 2 are connected to each other in a traditional way by means of well-known coupling means (not shown) which allow relative rotations.

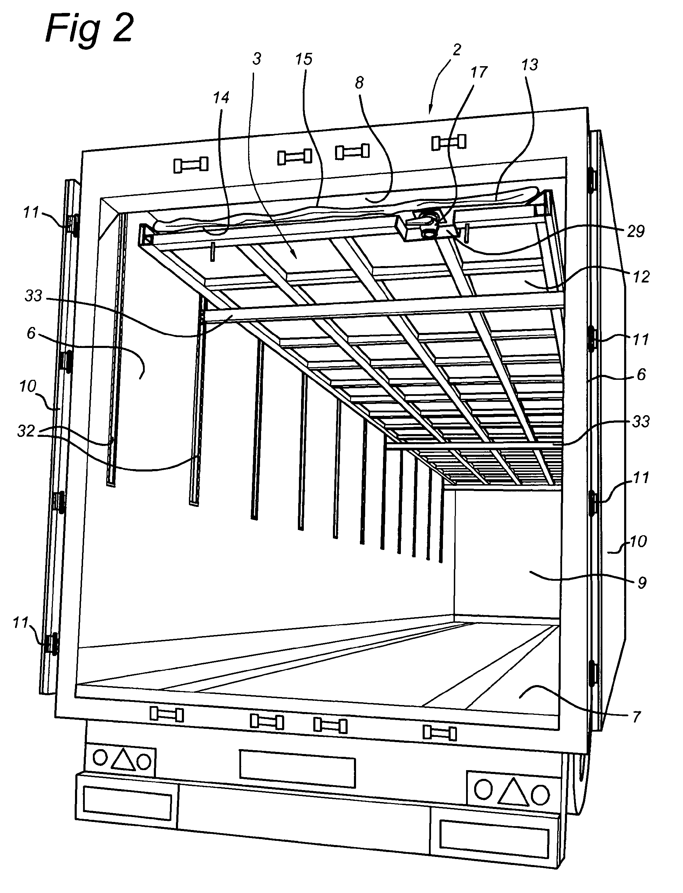

As furthermore shown in figure 2, the load compartment 3 consists of the longitudinal side walls 6, the load floor 7, the roof 8, the front bulkhead 9 and the back doors 10 which have been swung about the hinges 11 into in the fully open position in figure 2, against the outside of the longitudinal side walls 6. A heating device 35 has been mounted on the outside of the front bulkhead, for heating the load compartment 3 as will be explained hereunder.

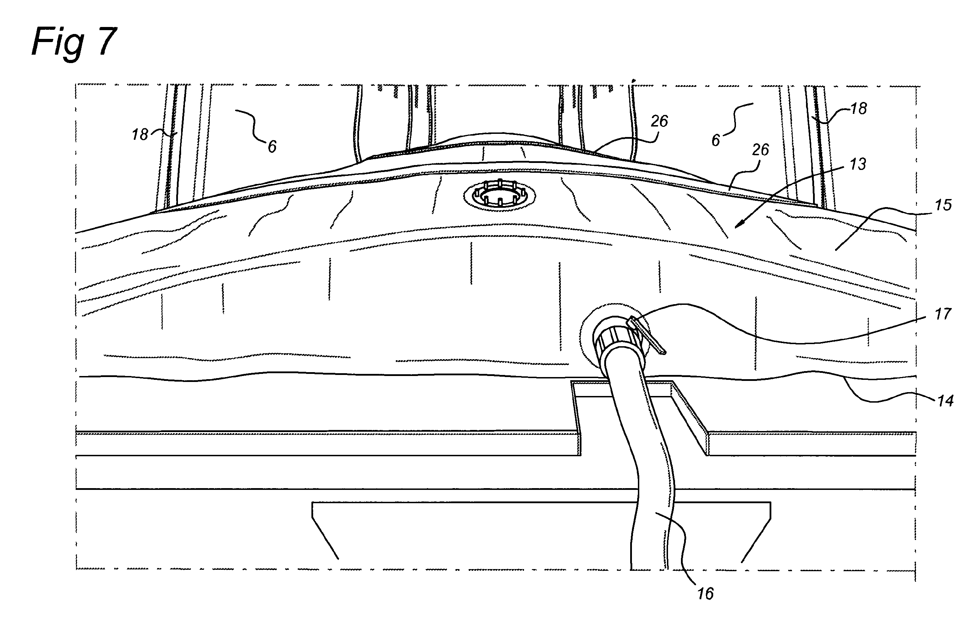

Within the load compartment 3, the mezzanine floor 12 has been provided. Said mezzanine floor supports the closed flexible bag 13. In particular, the lower surface 14 of said flexible bag 13 rests on top of the mezzanine floor of 12. The upper surface 15 of said flexible bag 13 is freely supported above the lower surface 14. In the situation shown in figures 2-4 and 6, the flexible bag 13 is empty which means that the upper surface 15 rests on the lower surface 14. However, in the position as shown in figure 7, the flexible bag 13 has been filled with a liquid through hose 16 connected to the valve 17 of the flexible bag 13. In this position, the upper surface 15 is supported at a distance above the lower surface 14, in dependence on the amount of liquid which has been introduced into the bag 13. A vent 34 has been provided for releasing gases from the flexible back 13 during the process of filling thereof.

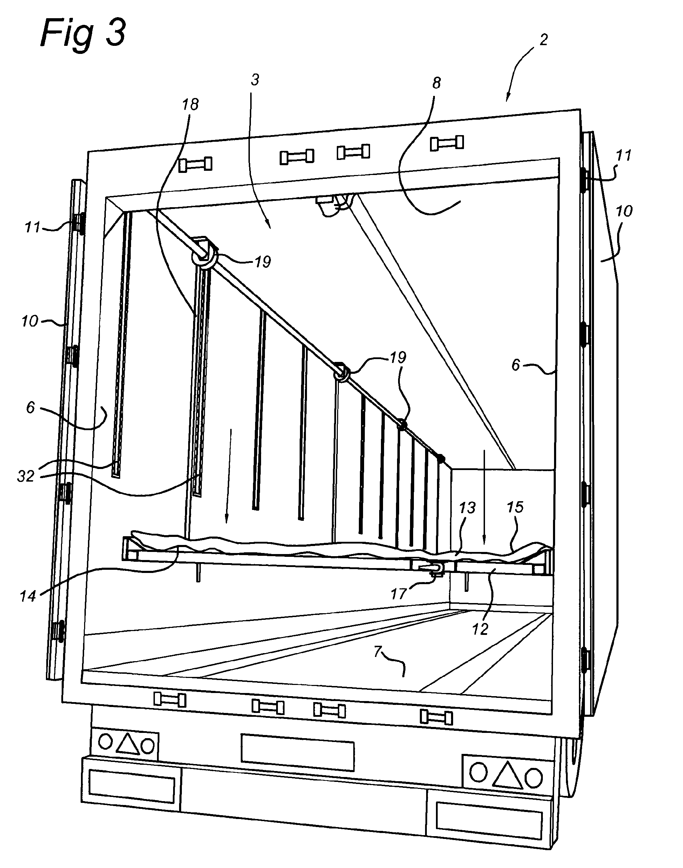

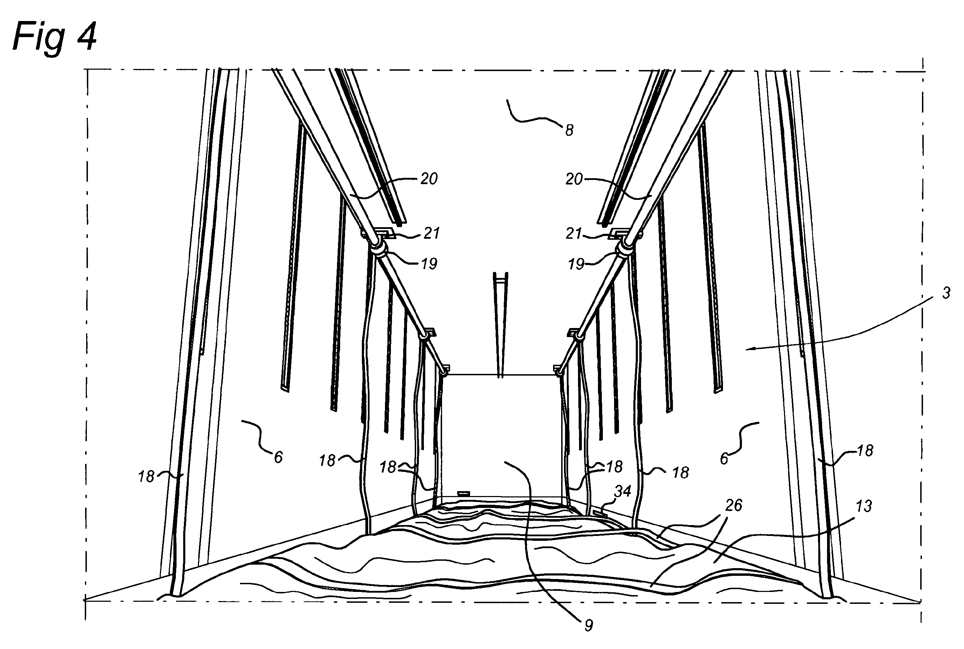

Now turning to the figures 3 and 4, the mezzanine floor 12 is supported from the roof 8 by means of the flexible straps 18 which are each wound on a winch element 19. As can be seen in figure 3, in this embodiment four of these winch elements 19 and four straps have been provided along each longitudinal side wall 6 of the load compartment 3. Of course, depending on the length of the load compartment and the weight to be supported, more or less of these winch elements and straps can be applied. The winch elements 19 each fixed on one of the torsion rods 20 which run next to the longitudinal side walls 6, and which are rotatably supported with respect to the roof 8 by means of bearing blocks 21.

The roof has been provided with a heat distributing duct 36. Said duct is fed with heated air form the heating device 35 which is mounted on the outside of the front bulkhead 9, as mentioned before. Thus, the load compartment 3 can be heated as desired. The heat distributing duct 36 is of a limited height, in such a way that it does not interfere with the upward movement of the mezzanine floor 12.

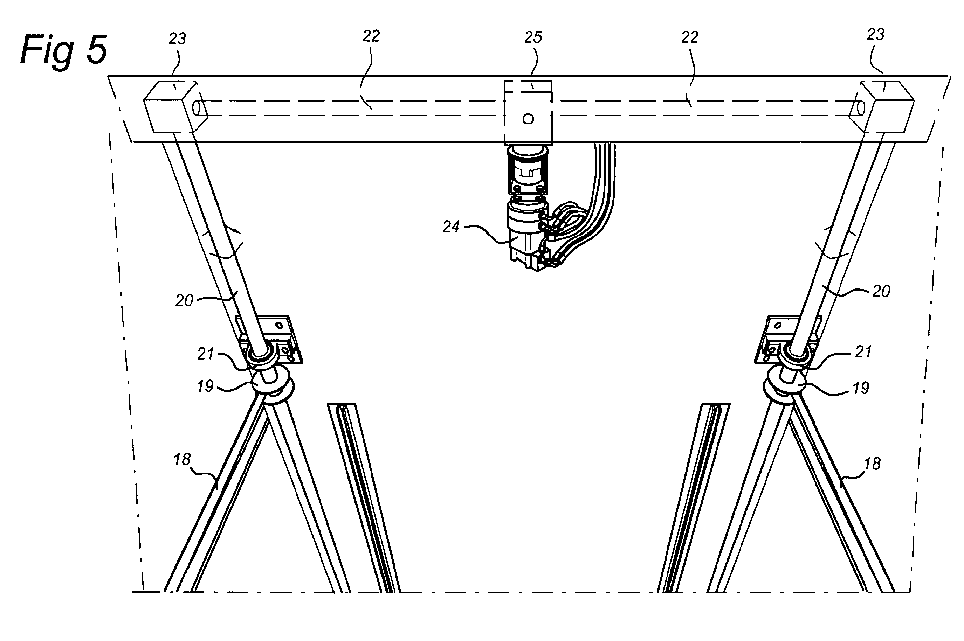

As shown in figure 5, the torsion rods 20 are interconnected through the transversely extending drive rod 22 and the gear transmissions 23. The drive rod 22 itself is driven by the hydraulic motor 24 through the gear transmission 25. By energizing the hydraulic motor 24, the mezzanine floor 12 together with the flexible bag 13 can be moved up and down, as desired. By closing the hydraulic lines which feed the hydraulic motor 24, the mezzanine floor 12 can be locked in any desired position.

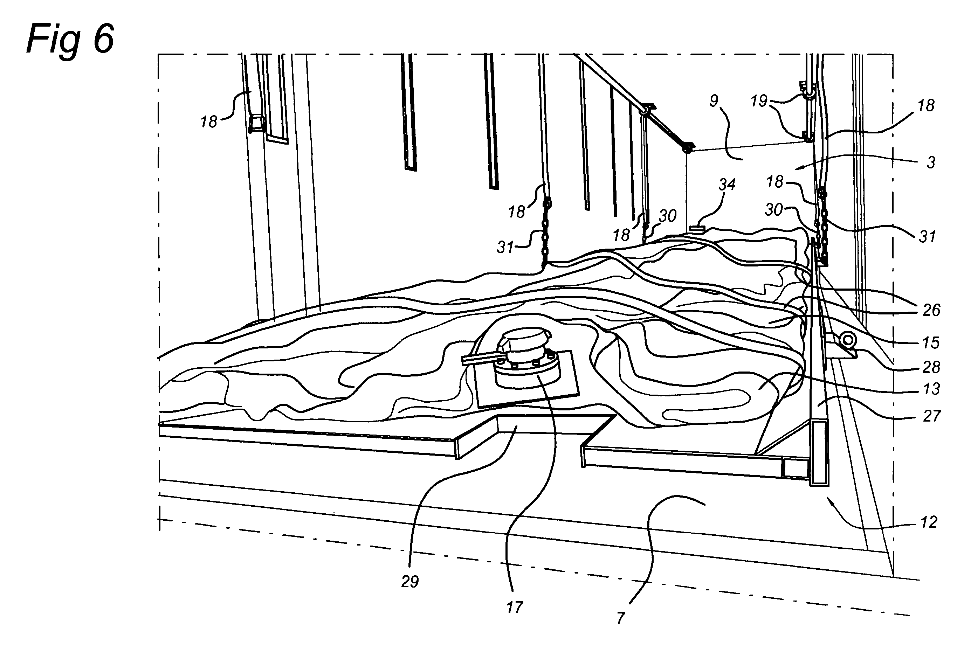

As also shown in figure 4, tie wraps 26 extend over the flexible bag 13. These tie wraps 26 are each connected to opposite edges of the mezzanine floor 12, so as to stabilize the filled flexible bag 13 as shown in figure 7. By tensioning the tie wraps 26, the flexible black 13 can be held reliably with respect to the mezzanine floor 12. As furthermore shown in figure 6, the mezzanine floor 12 has longitudinal upstanding edges 27 which furthermore have a stabilizing effect on the flexible bag 13. Onto the upstanding edges 27, brackets 28 have been welded onto which the straps 19 are connected. As also clearly visible in figure 6, the mezzanine floor 12 comprises a recess 29 for accommodating the valve 17, in particular in the raised position thereof as shown in figure 2.

For the purposes of completely emptying the flexible bag 13 through the valve 17, it is desirable to tilt the mezzanine floor 12 in such a way that the back of the mezzanine floor 12 is at a lower level than the front thereof. Such tilting position can be obtained by providing extension pieces in the form of chains 30, 31. In this connection, the straps which are closest to the front wall 9 of the load compartment 3 are directly connected to the corresponding brackets 28. Seen from the front wall 9, the second straps 19 are provided with a relatively short chain 30, and the third straps 19 are provided with a somewhat longer chain 31. Through these chains 30, 31, the second and third straps 19 are connected to the corresponding brackets 28. The fourth straps remain loose. By now energizing the hydraulic motor 24, the front part of the mezzanine floor 12 is lifted over a greater distance than the back part of the mezzanine floor 12, thus promoting the flow of liquid within the flexible back 13 towards and through the valve 17.

As shown in figures 3 and 4, the longitudinal side walls 6 are provided with mounting rails 32. Between two opposite mounting rails 32, a support bar 33 can be applied as shown in figure 2. By means of these support bars 32, the mezzanine floor 12 can be secured in a desired location. Although in figure 2 the mezzanine floor 12 has been secured in the uppermost position, it is also possible to apply the support bars 33 at a lower position, for providing additional loading space on top of the mezzanine floor after removing the flexible bag.

### List of reference numerals

1. Truck
2. Trailer
3. Load compartment
4. Chassis
5. Wheels
6. Longitudinal side wall
7. Load floor
8. Roof
9. Front wall
10. Backdoor
11. Hinge
12. Mezzanine floor
13. Flexible bag
14. Bottom wall flexible bag
15. Top wall flexible bag
16. Hose
17. Valve
18. Strap
19. Winch
20. Torsion rod
21. Bearing block
22. Drive rod
23. Gear transmission
24. Hydraulic motor
25. Gear transmission
26. Tie wrap
27. Upstanding edge mezzanine floor
28. Bracket
29. Recess mezzanine floor
30. Relatively short chain
31. Relatively long chain
32. Mounting rail
33. Support bar
34. Vent
35. Heating device
36. Heat distributing duct

## Claims

1. Transport vehicle comprising a chassis (4) provided with wheels (5), a load compartment (3) on said chassis (4) and provided with a load floor (7), longitudinal side walls (6) which extend upwardly with respect to the load floor, a bulkhead (9) at the front, at least one load door (10) at the back, as well as a roof (8), wherein a mezzanine floor (12) is provided in the load compartment (3) above the load floor (7), lifting means (18-25) which cooperate with the mezzanine floor (12) for adjusting the height of said mezzanine floor with respect to the load floor, as well as a closed flexible bag (13) for containing a fluid, said bag having a lower surface (14) and an upper surface (15), said lower surface (14) of the bag (13) being supported in the load compartment (3) and said upper surface (15) of the bag being freely supported above said lower surface (14) in dependence on the contents of the bag (13), **characterized in that** the flexible bag (13) is positioned on top of the mezzanine floor (12), **in that** the bag is provided with a fluid valve (17) for filling and emptying the bag, **in that** the fluid valve (17) is at the back of the bag near the load door(s) (10), and **in that** on each longitudinal side wall (6), relatively close to the front wall (9), a pulling member (19, 30) is provided which is shorter than a pulling member (19, 31) further away from said front wall, in such a way that the mezzanine floor is made to tilt as a result of the length differences of said pulling members.

2. Vehicle according to claim 1, wherein the bag (13) comprises a flexible material, such as rubber or plastic.

3. Vehicle according to claim 1 or 2, wherein the mezzanine floor (12) is provided with a recess (29) in which the valve (17) is accommodated.

4. Vehicle according to any of the preceding claims, wherein the bag (13) has a vent (34) for venting air or gas which is contained in the bag.

5. Vehicle according to any of the preceding claims, wherein the mezzanine floor (12) comprises upstanding longitudinal side edges (27).

6. Vehicle according to any of the preceding claims, wherein tie wraps (26) are provided which extend over the bag (13) and the ends of which are connected to opposite longitudinal sides of the mezzanine floor (12).

7. Vehicle according to any of the preceding claims, wherein the lifting means comprise flexible pulling members, such as straps (19), one end of which is connected to the mezzanine floor (12) and the other end of which is wound on a respective winch element (18).

8. Vehicle according to claim 7, wherein at least two winch elements (18) are distributed along the each longitudinal side wall (6) and near the roof (8), each winch element being connected to a respective pulling member, such as a strap (19).

9. Vehicle according to claim 8, wherein the winch elements (18) which are distributed along a longitudinal side wall (6) are interconnected through a torsion rod (20), each torsion rod being driven by a hydraulic drive (24).

10. Vehicle according to claim 9, wherein each torsion rod (20) engages a transversely extending drive rod (22) through a transmission (23), said drive rod being connected to a motor (24).

11. Vehicle according to any of the preceding claims, wherein the longitudinal side walls (6) comprise upwardly extending mounting rails (32), a support bar (33) being provided which is connectable to pairs of opposite mounting rails, the mezzanine floor (12) being supportable by means of said supporting bars (33) connected to a pair of opposite mounting rails (32) each.

12. Method for operating a transport verhicle according to one of the preceding claims, comprising the steps of:
- filling the flexible bag (13) with a fluid,
- operating the lifting means (18-25) while the flexible bag (13) is filled with said fluid,
- during said operation of the lifting means (18-25), making the mezzanine floor (12) tilt,
- opening the fluid valve (17) and making the fluid flow towards said valve under the influence of the tilted position of the flexible bag (13),
- providing, on each longitudinal side wall (6), a pulling member (19, 30) relatively close to the front wall (9) which is shorter than a pulling member (19, 31) further away from said front wall,
- making the mezzanine floor (12) tilt as a result of the length differences of said pulling members.

## Patentansprüche

1. Transportfahrzeug, welches ein Chassis (4), welches mit Rädern (5) bereitgestellt ist, einen Laderaum (3) auf dem Chassis (4), und welcher mit einem Ladegeschoss (7), längsgerichteten Seitenwänden (6), welche sich mit Bezug auf das Ladegeschoss nach oben erstrecken, einer Trennwand (9) an der Vorderseite, zumindest einer Ladetür (10) an der Rückseite, als auch einem Dach (8), wobei ein Hochparterre-Geschoss (12) in dem Laderaum (3) oberhalb des Ladegeschosses (7) bereitgestellt ist, einem Anhebemittel (18-25), welches mit dem Hochparterre-Geschoss (12) zusammenwirkt, um die Höhe von dem Hochparterre-Geschoss mit Bezug auf das Ladegeschoss einzustellen, als auch einem geschlossenen, flexiblen Beutel (13) zur Aufnahme eines Fluides bereitgestellt ist, wobei der Beutel eine untere Fläche (14) und eine obere Fläche (15) hat, wobei die untere Fläche (14) des Beutels (13) in dem Laderaum (3) gehalten ist und die obere Fläche (15) des Beutels oberhalb der unteren Fläche (14), in Abhängigkeit von den Inhalten des Beutels (13), frei gehalten ist, enthält, **dadurch gekennzeichnet, dass** der flexible Beutel (13) oberhalb des Hochparterre-Geschosses (12) positioniert ist, der Beutel (13) mit einem Fluidventil (17) zum Auffüllen und Entleeren des Beutels bereitgestellt ist, das Fluidventil (17) an der Rückseite von dem Beutel, nahe der Ladetür bzw. Ladetüren (10), ist, und an jeder längsgerichteten Seitenwand (6), relativ nahe zur Vorderwand (9), ein Zugelement (19, 30) bereitgestellt ist, welches kürzer als ein Zugelement (19, 31) ist, welches von der Vorderwand weiter entfernt ist, so dass das Hochparterre-Geschoss, resultierend aus den Längendifferenzen der Zugelemente, neigbar ist.

2. Fahrzeug nach Anspruch 1, bei welchem der Beutel (13) ein flexibles Material enthält, wie beispielsweise Gummi oder Kunststoff.

3. Fahrzeug nach Anspruch 1 oder 2, bei welchem das Hochparterre-Geschoss (12) mit einer Aussparung (29) bereitgestellt ist, in welcher das Ventil (17) untergebracht ist.

4. Fahrzeug nach einem der vorhergehenden Ansprüche, bei welchem der Beutel (13) eine Entlüftung (34) zum Entlüften von Luft oder Gas hat, welches in dem Beutel enthalten ist.

5. Fahrzeug nach einem der vorhergehenden Ansprüche, bei welchem das Hochparterre-Geschoss (12) aufgerichtete, längsgerichtete Seitenkanten (27) enthält.

6. Fahrzeug nach einem der vorhergehenden Ansprüche, bei welchem Bindehüllen (26) bereitgestellt sind, welche sich oberhalb des Beutels (13) erstrecken, und wobei die Enden derer mit gegenüberliegenden, längsgerichteten Seiten von dem Hochparterre-Geschoss (12) verbunden sind.

7. Fahrzeug nach einem der vorhergehenden Ansprüche, bei welchem das Anhebemittel flexible Zugelemente, wie beispielsweise Gurte (19), enthält, wobei ein Ende davon mit dem Hochparterre-Geschoss (12) verbunden ist und das andere Ende davon auf einer jeweiligen Winde (18) gewickelt ist.

8. Fahrzeug nach Anspruch 7, bei welchem zumindest zwei Winden (18) entlang von jeder längsgerichteten Seitenwand (6) und nahe des Daches (8) verteilt sind, wobei jede Winde mit einem jeweiligen Zugelement, wie beispielsweise ein Gurt (19), verbunden ist.

9. Fahrzeug nach Anspruch 8, bei welchem die Winden (18), welche entlang von einer längsgerichteten Seitenwand (6) verteilt sind, über einen Torsionsstab (20) verbunden sind, wobei jeder Torsionsstab durch einen Hydraulikantrieb (24) angetrieben ist.

10. Fahrzeug nach Anspruch 9, bei welchem jeder Torsionsstab (20) über ein Getriebe (23) mit einem sich quer erstreckenden Antriebsstab (22) in Eingriff steht, wobei der Antriebsstab mit einem Motor (24) verbunden ist.

11. Fahrzeug nach einem der vorhergehenden Ansprüche, bei welchem die längsgerichteten Seitenwände (6) aufgerichtet erstreckte Befestigungsschienen (32) enthalten, wobei ein Haltestab (33) bereitgestellt ist, welcher mit Paaren von gegenüberliegenden Befestigungsschienen verbindbar ist, wobei das Hochparterre-Geschoss (12) mittels der Haltestäbe (33) haltbar ist, welche jeweils mit einem Paar von gegenüberliegenden Befestigungsschienen (32) verbunden sind.

12. Verfahren zum Bedienen eines Transportfahrzeugs nach einem der vorhergehenden Ansprüche, welches die Schritte enthält:
Befüllen des flexiblen Beutels (13) mit einem Fluid,
Bedienen des Anhebemittels (18-25), während der flexible Beutel (13) mit dem Fluid gefüllt wird,
Vorsehen, dass sich das Hochparterre-Geschoss (12) während des Bedienens des Anhebemittels (18-25) neigt,
Öffnen des Fluidventils (17), und Vorsehen, dass das Fluid unter dem Einfluss der geneigten Position des flexiblen Beutels (13) zum Ventil fliesst,
Bereitstellen eines Zugelementes (19, 30) an jeder längsgerichteten Seitenwand (6), relativ nahe zur Vorderwand (9), welches kürzer als ein Zugelement (19, 31) ist, welches von der Vorderwand weiter entfernt ist,
Vorsehen, dass sich das Hochparterre-Geschoss (12), resultierend aus den Längendifferenzen der Zugelemente, neigt.

## Revendications

1. Véhicule de transport comprenant un châssis (4) muni de roues (5), un compartiment de chargement (3) sur ledit châssis (4) et muni d'un plancher de chargement (7), de parois latérales longitudinales (6) qui s'étendent vers le haut par rapport au plancher de chargement, une cloison (9) à l'avant, au moins une porte de chargement (10) à l'arrière, ainsi qu'un toit (8) dans lequel une mezzanine (12) est munie dans le compartiment de chargement (3) au dessus du plancher de chargement (7), de moyens de levage (18-25) qui coopèrent avec la mezzanine (12) pour ajuster la hauteur de ladite mezzanine par rapport au plancher de chargement, ainsi qu'un sac souple fermé (13) pour contenir un fluide, ledit sac ayant une surface inférieure (14) et une surface supérieure (15), ladite surface inférieure (14) du sac (13) étant supportée dans le compartiment de chargement (3) et ladite surface supérieure (15) du sac étant librement supportée au dessus de ladite surface inférieure (14) en fonction du contenu du sac (13) **caractérisé en ce que** le sac souple (13) est positionné au dessus de la mezzanine (12), **en ce que** le sac est muni d'une vanne de fluide (17) pour remplir ou vider le sac, **en ce que** la vanne de fluide (17) est à l'arrière du sac près de la / des porte(s) de chargement (10), et **en ce que** sur chaque paroi latérale longitudinale (6) relativement proche de la paroi avant (9), un organe de traction (19, 30) est prévu, lequel est plus court qu'un organe de traction (19, 31) éloigné de ladite paroi avant, d'une manière telle que la mezzanine est faite pour s'incliner en fonction en fonction des différences de longueur desdits organes de traction.

2. Véhicule selon la revendication 1, dans lequel le sac (13) comprend un matériel souple, tel que le caoutchouc ou le plastique.

3. Véhicule selon la revendication 1 ou 2, dans lequel la mezzanine (12) est munie d'un évidement (29) dans lequel la vanne (17) est contenue.

4. Véhicule selon l'une quelconque des précédentes revendications, dans lequel le sac (13) a un orifice (34) pour évacuer l'air ou le gaz contenu dans le sac.

5. Véhicule selon l'une quelconque des précédentes revendications, dans lequel la mezzanine comprend des bords latéraux longitudinaux relevés (27).

6. Véhicule selon l'une quelconque des précédentes revendications, dans lequel des attaches (26) sont prévues qui s'étendent sur le sac (13) et les extrémités de ces dernières sont connectées aux côté longitudinaux opposés de la mezzanine (12).

7. Véhicule selon l'une quelconque des précédentes revendications dans lequel les moyens de levage comprennent des organes de traction souples, tels que des courroies, dont une extrémité est reliée à la mezzanine, et dont l'autre extrémité est fixée à un dispositif de treuillage correspondant.

8. Véhicule selon la revendication 7, dans lequel au moins deux dispositifs de treuillage (18) sont répartis le long de chaque paroi latérale longitudinale (6) et près du toit (8), chaque dispositif de treuillage étant connecté à un organe de traction respectif, tel qu'une courroie (19).

9. Véhicule selon la revendication 8, dans lequel des dispositifs de treuillage qui sont répartis le long d'une paroi latérale longitudinale (6) sont interconnectés à travers une barre de torsion (20), chaque barre de torsion étant dirigée par une commande hydraulique.

10. Véhicule selon la revendication 9, dans lequel chaque barre de torsion (20) entraîne une barre de commande (22) s'étendant transversalement à travers une transmission (23), ladite barre de commande étant reliée à un moteur (24).

11. Véhicule selon l'une quelconque des précédentes revendications, dans lequel les parois latérales longitudinales (6) comprennent des rails de montage (32) s'étendant vers le haut, une barre de support (33) étant prévue qui peut être connectée à des paires de rails de montage opposées, la mezzanine (12) pouvant être soutenue au moyen desdites barres de support (33) reliées respectivement à une paire de rails de montage (32) opposée.

12. Procédé pour faire fonctionner le véhicule de transport selon l'une quelconque des précédentes revendications, comprenant les étapes consistant à :
- remplir le sac souple (13) avec un fluide,
- faire fonctionner les moyens de levage (18-25) pendant que le sac souple (13) est rempli avec ledit fluide,
- pendant ladite opération des moyens de levage, (18-25), procéder à l'inclinaison de la mezzanine (12),
- ouvrir la vanne de fluide (17) et faire circuler le fluide en direction de ladite vanne sous l'influence de la position inclinée du sac souple (13),
- munir, sur chaque paroi latérale longitudinale (6), un organe de traction (19, 30) relativement proche de la paroi avant (9) qui est plus court qu'un organe de traction (19, 31) éloigné de ladite paroi avant.
- procéder à l'inclinaison de la mezzanine (12) en raison des différences de longueurs desdits organes de traction.
